Europäisches Patentamt

European Patent Office

Office européen des brevets

(19)

(11) Veröffentlichungsnummer: **0 397 963 B1**

(12) **EUROPÄISCHE PATENTSCHRIFT**

(45) Veröffentlichungstag der Patentschrift: **20.10.93**

(51) Int. Cl.⁵: **C04B 7/30**

(21) Anmeldenummer: **90100719.5**

(22) Anmeldetag: **15.01.90**

(54) **Hochreaktives, hydraulisches Bindemittel für die Herstellung von Bau- und Werkstoffen.**

(30) Priorität: **19.05.89 CH 1888/89**

(43) Veröffentlichungstag der Anmeldung:
**22.11.90 Patentblatt 90/47**

(45) Bekanntmachung des Hinweises auf die
Patenterteilung:
**20.10.93 Patentblatt 93/42**

(84) Benannte Vertragsstaaten:
**AT BE CH DE DK ES FR GB IT LI LU NL SE**

(56) Entgegenhaltungen:
**DE-A- 3 610 722**
**GB-A- 664 369**
**US-A- 4 375 985**

**AMERICAN CERAMIC SOCIETY BULLETIN.
vol. 63, no. 2, Januar 1984, COLUMBUS US
Seiten 290 - 294; A.BENTUR et al:
"Modification of the Cementing Properties of
Oil Shale Ash"**

**ZEMENT, KALK, GIPS. vol. 58, no. 7, Juli 1969,
WIESBADEN DE Seiten 293 - 296;
R.ROHRBACH: "Herstellung von Ölschieferzement und Gewinnung elektrischer Energie
aus Ölschiefer nach dem Rohrbach-
Lurgi-Verfahren"**

(73) Patentinhaber: **Sika AG, vorm. Kaspar Winkler
& Co.
Tüffenwies 16-22
CH-8048 Zürich(CH)**

(72) Erfinder: **Bürge, Theodor A.
Waldrütistrasse 3
CH-8954 Geroldswil(CH)**
Erfinder: **Bodenmann, Eugen
Schauenbergstrasse 31
CH-8046 Zürich(CH)**

(74) Vertreter: **Blum, Rudolf Emil Ernst et al
c/o E. Blum & Co
Patentanwälte
Vorderberg 11
CH-8044 Zürich (CH)**

EP 0 397 963 B1

**Beschreibung**

Die vorliegende Erfindung betrifft ein hochreaktives, hydraulisches Bindemittel für die Herstellung von Bau-und Werkstoffen.

Die konventionellen hydraulischen Bindemittel wie Zement und Kalk haben Abbindezeiten um 5 Stunden und eine ausgeprägt langsame Festigkeitsentwicklung. Für viele Anwendungen wie z.B. der Reparatur von Strassen, Brücken, Flugpisten etc. ist jedoch ein rasches Erhärten äusserst wichtig.

Durch kürzere Reparaturzeiten können diese Bauwerke rascher wieder dem Verkehr übergeben werden und damit enorme Kosten gespart werden. Eine rasche Festigkeitsentwicklung ist deshalb von volkswirtschaftlichem Interesse.

Oelschiefer ist ein fossiler Energieträger, welcher eine beträchtliche Menge organischer Materie in einer Matrix von feinen anorganischen Mineralien enthält. Um das Oel aus dem Oelschiefer zu gewinnen, muss die organische Substanz, das Kerogen, thermisch zersetzt werden. Zurück bleibt ein anorganischer Rückstand, welcher als gebrannter Oelschiefer bezeichnet wird. Ein grosser Teil des heute anfallenden gebrannten Oelschiefers muss nutzlos auf Deponien entsorgt werden.

Die grössten Vorkommen an Oelschiefer liegen in den USA, Brasilien, UdSSR, Kanada, Italien, Deutschland und Australien.

Neben der Bezeichnung Oelschiefer, bituminöser Schiefer oder Kerogen-Gestein findet man Namen, die sich auf das Material einer bestimmten Lagerstätte oder eines Gebietes beziehen, wie z.B. Blätterkohle, Coorongite, Ichthyol-Schiefer, Kukersit, Marahunit, Posidonienschiefer, Stinkschiefer, Tasmanit oder Torbanit.

Die häufigsten Mineralien in den Oelschieferablagerungen sind Quarz, Feldspat, verschiedene Typen von Ton und verschiedene Carbonate, z.B. Calcium- und Magnesiumcarbonat.

Tab. 1 Mineralogische Zusammensetzung der anorganischen Substanz amerikanischer Oelschiefer (Green River)

| Mineral | Chemische Formel | Anteil in Massen-% |
|---|---|---|
| Dolomit | $CaMg(CO_3)_2$ | 32 - 33 |
| Kalkspat | $CaCO_3$ | 16 - 20 |
| Quarz | $SiO_2$ | 10 - 15 |
| Tone (Illit) | $K_2O.3Al_2O_3.6SiO_2.2H_2O$ | 11 - 19 |
| Orthoklase (Adular) | $KAlSi_3O_8$ | 4 - 6 |
| Plagioklase (Albit) | $NaAlSi_3O_8.CaAl_2Si_2O_8$ | 10 - 12 |
| Zeolithe (Analcim) | $NaAlSi_2O_6.H_2O$ | 1 - 7 |
| Pyrit, Markasit | $FeS_2$ | 1 - 3 |

Oelschiefer ist ein geschichtetes Sedimentgestein, welches mehr als 33 % Asche sowie organische Bestandteile enthält, welche bei der Destillation Oel ergeben, aber nur in unwesentlichen Mengen mit herkömmlichen Lösungsmitteln für Petroleum extrahiert werden können. Zur Energiegewinnung muss der Oelschiefer auf geeignete Art und Weise zersetzt werden. Es sind diverse Schwel-, Verbrennungs- und Vergasungsverfahren bekannt.

Ein kommerzieller Brennprozess für Oelschiefer und bitumenhaltige Rohstoffe mit mergelartigem Charakter ist das Wirbelschicht-Verfahren. Das Hauptprodukt ist dabei der gebrannte Oelschiefer, der in der Baustoffindustrie verwendet wird. Durch die freiwerdende Wärme wird primär die Brenntemperatur im Ofenraum aufrechterhalten. Zusätzlich wird Energie gewonnen.

Dieser Prozess liefert aufgrund einer optimalen Verbrennungstemperatur von 800°C einen Abbrand mit hydraulischen Eigenschaften, welche ohne Kalkzusatz folgende Druckfestigkeiten gemäss DIN 1164 ergeben:

| Druckfestigkeit nach | 3 Tagen ~ 5 MPa |
|---|---|
| | 7 Tagen ~ 16 MPa |
| | 28 Tagen ~ 33 MPa. |

Ein nordafrikanischer gebrannter Oelschiefer weist beispielsweise nach 28 Tagen eine Druckfestigkeit von nur 22 MPa auf.

Gemäss DIN 1164 ist gebrannter Oelschiefer ein hydraulisch erhärtender Stoff. Er entsteht durch Brennen von Oelschiefer bei etwa 800°C im Wirbelschichtverfahren. Er besteht überwiegend aus Calciumsilikaten, Calciumaluminaten Calciumsulfaten und reaktionsfähigem Siliziumdioxid. Röntgenographisch können die folgenden mineralogischen Phasen nachgewiesen werden:

Dicalciumsilikat, Tricalciumaluminat, Moncalciumaluminat, Anhydrit, Calciumoxid und Calciumaluminatferrit.

Tab. 2

| Typische chemische Zusammensetzungen | | | | |
|---|---|---|---|---|
| Verbindungen | HERKUNFT | | | |
| | Schottland | Colorado/USA | BRD | Israel Tzefa Efe |
| CaO | 5.3 % | 21.8 % | 16-60 % | 44.5 % |
| $SiO_2$ | 48.5 | 32.0 | 12.25 | 19.0 |
| $Al_2O_3$ | 25.2 | 7.2 | 9-12 | 8.3 |
| $Fe_2O_3$ | 12.1 | 2.7 | 6-7 | 4.3 |
| MgO | 2.2 | 7.5 | 1.4-2.0 | 0.7 |
| $Na_2O + K_2O$ | - | 2.3 | - | 1.1 |
| $P_2O_5$ | - | - | - | 2.4 |
| $SO_3$ | - | - | 9-10 | 8.5 |
| Organischer Anteil | - | - | - | 0.9 |
| $CO_2$ | - | - | - | 6.2 |
| Glühverlust | - | 20.0 | - | 11.3 |

Gebrannter Oelschiefer hat ein relativ langsames hydraulisches Erhärten, was aus dem Erstarrungsverhalten hervorgeht. Der Abbindebeginn liegt gemäss DIN 1164 bei ca. 2,5 Stunden, das Abbindeende bei ca. 5 Stunden.

Gebrannter Oelschiefer wird zur Herstellung von Portlandölschieferzement verschiedener Festigkeitsklassen verwendet, wobei die Anteile des Portlandzementklinkers 65-90 % und der Anteil des gebrannten Oelschiefers 10 - 35 % betragen dürfen.

Als Ursache für die hydraulische Erhärtung von gebranntem Oelschiefer sind einerseits die Klinkermineralien, vor allem Dicalciumsilikat und Calciumaluminat sowie die Reaktion des gebrannten Kalkes mit dem Siliziumdioxid verantwortlich. Gleichzeitig tritt eine Bildung von Ettringit (Calciumsulfoaluminat) ein. Für viele Anwendungszwecke sind die mit gebranntem Oelschiefer und dessen Abmischungen mit Portlandzement erreichbaren Eigenschaften wie langsame Abbindezeiten und geringe Festigkeitsentwicklung ungenügend.

Eine Aufgabe der vorliegenden Erfindung war deshalb diese Eigenschaften zu verbessern und damit gewaltige Mengen von gebranntem Oelschiefer neuen volkswirtschaftlich interessanten Anwendungsmöglichkeiten zuzuführen.

Aufgrund zahlreicher Versuche hat sich überraschenderweise gezeigt, dass gebrannter Oelschiefer im Erhärten so beschleunigt werden kann, dass die bisher üblichen 7 Tage Druckfestigkeiten bereits nach 2 Stunden und 28 Tage Druckfestigkeiten in weniger als 24 Stunden erreicht werden können. Trotz dieser Beschleunigung der Festigkeitsentwicklung kann die Verarbeitungszeit nach Wunsch gesteuert werden. Je nach Anwendung kann das Erhärten in wenigen Minuten oder erst nach Stunden herbeigeführt werden.

EP 0 397 963 B1

Es ist eine Aufgabe der vorliegenden Erfindung, ein hochreaktives, hydraulisches Bindemittel zur Verfügung zu stellen, welches im Vergleich zu bekannten Mitteln viel rascher aushärtet. Ebenso soll im erfindungsgemässen Bindemittel ein Abfallprodukt, nämlich gebrannter Oelschiefer, einer neuen sinnvollen Verwendung zugeführt werden.

Die Erfindung ist durch die Merkmale in den unabhängigen Ansprüchen gekennzeichnet.

Bevorzugte Ausführungsformen sind in den abhängigen Ansprüchen definiert.

Das erfindungsgemässe Bindemittel kann aus amorphen Oxiden und Hydroxiden 3- und 4-wertiger Kationen und/oder anderer Aluminiumverbindungen sowie den bei der Verschwelung oder Verbrennung von Oelschiefer anfallenden Rückstände gebrannter Oelschiefer wirtschaftlich hergestellt werden.

Als besonders wirksame Beschleuniger konnten gefunden werden: Amorphe Oxide und/oder Hydroxide von 3- und 4-wertigen Kationen sowie Alkali- und/oder Erdalkalialuminate, wobei die Calciumaluminate (CA, $CA_2$, $C_3A$ und $C_{12}A_7$) eine besonders gute Wirkung ergaben. Dabei haben diese Abkürzungen folgende Bedeutung:

$CA = CaO \cdot Al_2O_3$

$CA_2 = CaO \cdot 2Al_2O_3$

$C_3A = 3CaO \cdot Al_2O_3$

$C_{12}A_7 = 12CaO \cdot 7Al_2O_3$.

Die Erdalkalialuminate können synthetisch durch bekannte Prozesse hergestellt werden, sie können aber auch in Form von Klinkerbestandteilen eines Zementes der erfindungsgemässen Mischung zugegeben werden.

Beispiel 1

Als Beispiel für eine erfindungsgemässe Bindemittel-Mischung kann angegeben werden:

| | |
|---|---|
| Gebrannter Oelschiefer | 78 Gew.% |
| Calciumaluminat | 8 " |
| Amorphes Siliziumdioxid | 10 " |
| Amorphes Aluminiumhydroxid | 1 " |
| Betonverflüssiger (Sulfoniertes Melamin-Formaldehydkondensat) | 3 " |

Diese Mischung wird mit 40 Gew.% Wasser angemacht und aushärten gelassen.

Dieses Bindemittel kann mit Sand oder mit Sand und Kies gemischt zu Bau- und Werkstoffen verarbeitet werden.

In den nachfolgenden Beispielen wird die obige Mischung als Bindemittel verwendet.

Die Abbindezeiten können durch den Zusatz von Calciumaluminaten in weiten Grenzen variiert werden, wie in Beispiel 2 gezeigt wird:

Beispiel 2

Abbindezeiten von Bindemittelproben gemessen nach der Vicat-Methode DIN 1164.

| Bindemittel Mischung Gew.-% | Calciumaluminat Gew.-% | Abbindezeiten | |
|---|---|---|---|
| | | Beginn Min. | Ende Min. |
| 100 | 0 | 200 | 240 |
| 96 | 4 | 65 | 85 |
| 92 | 8 | 55 | 65 |
| 88 | 12 | 28 | 35 |
| 84 | 16 | 20 | 30 |

Durch den Zusatz von amorphen Aluminiumverbindungen kann die Festigkeitsentwicklung gesteuert werden.

Beispiel 3

Einfluss des Zusatzes von amorphen Aluminiumhydroxid auf die Frühfestigkeit (MPa) von Beton.

| Gew.-% Bindemittel-Mischung | Gew.-% Al-hydroxid | 2 Stunden Druckfestigkeit (MPa) |
|---|---|---|
| 100 | 0 | 0 |
| 99 | 1 | 3 |
| 98.5 | 1.5 | 4.2 |
| 98 | 2 | 5.5 |
| 97.5 | 2.5 | 8.3 |
| 97 | 3 | 14.9 |

Als zusätzliche Beschleuniger eignen sich Oxide, Hydroxide und Carbonate der Alkalien und Erdalkalien. Betonverflüssiger mit mehr oder weniger starker Abbindeverzögerung können zur Regelung der Verarbeitungszeit und der Anmachwassermenge verwendet werden. Als geeignet haben sich die Produkte auf Ligninsulfonat-, Melamin-, Naphthalin-, Maleinsäure- und Acrylbasis erwiesen. Als verzögernde Komponente kommen alle Phosphate, Polyhydroxyl- und Borverbindungen sowie Polyhydroxycarbonsäuren in Frage.

Beispiel 4

Einfluss eines verzögernden Verflüssigers auf das Betonausbreitmass bei W/Z konst. 0.4.

| Gew.-% Bindemittel-Mischung | Gew.-% Verzögernder Betonverflüssiger auf Melaminbasis | Ausbreitmass des Betons cm |
|---|---|---|
| 100 | 0 | -- |
| 99 | 1 | 30 |
| 98 | 2 | 35 |
| 97 | 3 | 41 |
| 96 | 4 | 46 |
| 95 | 5 | 50 |

Polymere, in Wasser gelöst, dispergiert oder emulgiert beeinflussen die Festigkeitsentwicklung in ausgeprägtem Masse.

Durch den Polymerzusatz kann auch die Haft-, Abrasions- und Erosionsfestigkeit sowie die Chemikalienresistenz stark verbessert werden.

Beispiel 5

Einfluss einer Polymerzugabe auf die Druckfestigkeitsentwicklung (MPa) von Normenmörtel.

| Polymer | 2 Std. | 4 Std. | 24 Std. | 7 Tage |
|---|---|---|---|---|
| wasserlösliches Melaminharz | 1,8 | 3,4 | 15,2 | 46,7 |
| dispergiertes Acrylharz | 6,0 | 9,5 | 21,2 | 48,6 |
| emulgiertes Epoxidharz + Härter | 0 | 1,8 | 30,6 | 50,4 |

Beispiel 6

Einfluss einer Polymerzugabe auf die Haftfestigkeit (MPa) von Normenmörtel auf Beton.

| Polymerzusatz | Haftfestigkeit nach 14 Tagen (MPa) |
|---|---|
| wasserlösliches Melaminharz | 1,9 |
| dispergiertes Acrylharz | 2,6 |
| emulgiertes Epoxidharz + Härter | 3,2 |

Die erfindungsgemässen Bindemittel-Mischungen können auch bei höherer Temperatur oder mittels Mikrowellen gehärtet werden. Durch die Mikrowellenhärtung können 28 Tage Festigkeiten bereits nach 2-5 Minuten erreicht werden. Beispiel 7 zeigt die Festigkeitsentwicklung unter verschiedenen Aushärtungsbedingungen.

Beispiel 7

Mikrowellenhärtung im Vergleich zur Aushärtung bei Raumtemperatur und deren Einfluss auf die Druckfestigkeit (MPa) von Normenmörtel.

| | 3 Min. | 2 Std. | 24 Std. | 7 Tage | 28 Tage |
|---|---|---|---|---|---|
| Raumtemperatur | 0 | 1,8 | 15,2 | 46,7 | 61,1 |
| Mikrowellen | 5,3 | 6,4 | 13,8 | 41,8 | 50,6 |

Beispiel 8

Einfluss verschiedener Calciumaluminate auf die Druckfestigkeit von Beton (MPa) bei verschiedenen Lagerungstemperaturen.

| Aushärtungstemperaturen | 20 °C | | 5 °C | |
|---|---|---|---|---|
| Calciumaluminat | $C_3A$ | $C_{12}A_7$ | $C_3A$ | $C_{12}A_7$ |
| 4 Stunden | 5,0 | 22,7 | 1,0 | 6,4 |
| 24 Stunden | 22,3 | 28,1 | 10,1 | 17,9 |
| 7 Tage | 48,3 | 29,3 | 34,8 | 34,4 |
| 28 Tage | 58,8 | 36,4 | 50,4 | 40,3 |

**Patentansprüche**

**1.** Hochreaktives hydraulisches Bindemittel für die Herstellung von Bau- und Werkstoffen, dadurch gekennzeichnet, dass es gebrannten Oelschiefer, $CaO \cdot Al_2O_3$, $CaO \cdot 2Al_2O_3$, $3CaO \cdot Al_2O_3$ und $12CaO \cdot 7Al_2O_3$ sowie wenigstens ein wasserreduzierendes Mittel enthält.

**2.** Hochreaktives hydraulisches Bindemittel gemäss Anspruch 1, dadurch gekennzeichnet, dass es zusätzlich noch wenigstens eine Verbindung, ausgewählt aus der Gruppe, bestehend aus
- einem amorphen Oxid 3- und/oder 4-wertiger Kationen,
- einem amorphen Hydroxid 3- und/oder 4-wertiger Kationen,
- einem Aluminat 1- und/oder 2-wertiger Kationen, welches nicht $CaO \cdot Al_2O_3$, $CaO \cdot 2Al_2O_3$, $3CaO \cdot Al_2O_3$ und $12CaO \cdot 7Al_2O_3$ ist, enthält.

3. Hochreaktives, hydraulisches Bindemittel gemäss Anspruch 1 oder 2, dadurch gekennzeichnet, dass es zusätzlich noch wenigstens ein abbindebeschleunigendes und/ oder ein abbindeverzögerndes Mittel, und/oder ein Polymer und/oder Fasern enthält.

4. Hochreaktives, hydraulisches Bindemittel gemäss einem der Ansprüche 1 bis 3, dadurch gekennzeichnet, dass es folgende Zusammensetzung aufweist:
   1 - 99,3 Gew.-% gebrannter Oelschiefer
   0,1 - 70 Gew.-% Aluminate von Kalzium und gegebenenfalls anderer 1- und/oder 2-wertiger Kationen
   0,01 - 10 Gew.-% wasserreduzierende Mittel
   0,01 - 7 Gew.-% abbindeverzögernde Mittel
   0,1 - 50 Gew.-% amorphes Oxid und/oder Hydroxid 3- und/oder 4-wertiger Kationen
   0 - 90 Gew.-% Zement.
   0 - 30 Gew.-% Polymere
   0 - 20 Gew.-% Fasern.

5. Hochreaktives, hydraulisches Bindemittel gemäss Anspruch 2, dadurch gekennzeichnet, dass das amorphe Oxid amorphes Aluminiumoxid und/oder amorphes Siliciumdioxid ist, und dass das amorphe Hydroxid amorphes Aluminiumhydroxid ist.

6. Hochreaktives, hydraulisches Bindemittel gemäss Anspruch 2, dadurch gekennzeichnet, dass das Aluminat ein Alkali aluminat ist.

7. Hochreaktives, hydraulisches Bindemittel gemäss Anspruch 1 oder 2, dadurch gekennzeichnet, dass die Calciumaluminate in Form von Klinkerbestandteilen eines Zementes zugegeben werden.

8. Hochreaktives, hydraulisches Bindemittel gemäss Anspruch 1 oder 2, dadurch gekennzeichnet, dass das wasserreduzierende Mittel ein Betonverflüssiger oder ein Fliessmittel auf der Basis von Ligninsulfonat, eines Melamin-, Naphthalin-, Acrylsäure- oder Maleinsäure-Copolymer ist.

9. Hochreaktives, hydraulisches Bindemittel gemäss Anspruch 3, dadurch gekennzeichnet, dass das abbindeverzögernde Mittel eine Polyhydroxylverbindung, Polyhydroxycarbonsäure, ein Ortho-, Meta-, Pyro- oder Polyphosphat, ein Borat, Metaborat oder Tetraborat ist.

10. Hochreaktives, hydraulisches Bindemittel gemäss Anspruch 3, dadurch gekennzeichnet, dass das Polymer ein wasserlösliches, sulfoniertes Kunstharz, ein in Wasser dispergierbares Vinyl-, Styrol-, Acrylcopolymer oder eine Kombination aus einem emulgierbaren Epoxidharz und einem emulgierbaren Härter ist.

11. Hochreaktives, hydraulisches Bindemittel gemäss Anspruch 3, dadurch gekennzeichnet, dass die Fasern aus Polypropylen, Polyester, Polyamid, Glas, Metall oder Kohlenstoff sind.

12. Verfahren zum Aushärten des hochreaktiven, hydraulischen Bindemittels gemäss einem der Ansprüche 1 bis 11, dadurch gekennzeichnet, dass man das genannte Bindemittel mit Wasser sowie gegebenenfalls weiteren Zusatzstoffen vermischt, und bei Temperaturen im Bereich von -30°C bis +150°C oder durch Anwendung von Mikrowellen aushärten lässt.

## Claims

1. Highly reactive hydraulic binder for the production of building materials, characterised in that it contains burnt oil shale, $CaO \cdot Al_2O_3$, $CaO \cdot 2Al_2O_3$, $3CaO \cdot Al_2O_3$ and $12CaO \cdot 7Al_2O_3$ as well as at least one water reducing medium.

2. Highly reactive hydraulic binder according to claim 1, characterised in that it contains in addition at least one compound selected from the group comprising:
   an amorphous oxide with 3 and/or 4 - valent cations,
   an amorphous hydroxide with 3 and/or 4 - valent cations,
   an aluminate with 1 or 2 - valent cations which is not $CaO \cdot Al_2O_3$, $CaO \cdot 2Al_2O_3$, $3CaO \cdot Al_2O_3$ and $12CaO \cdot 7Al_2O_3$.

7

3. Highly reactive hydraulic binder according to claim 1 or 2, characterised in that it contains in addition at least one binding accelerator and/or one binding retarder, and/or a polymer and/or fibres.

4. Highly reactive hydraulic binder according to one of claims 1 to 3, characterised in that it has the following composition:
1 - 99.3 % by weight burnt oil shale
0.1 - 70 % by weight calcium aluminate and possibly other 1- and/or 2- valent cations
0.01 - 10 % by weight water-reducing medium
0.01 - 7 % by weight binding retarder
0.1 - 50 % by weight amorphous oxide and/or hydroxide with 3-and/or 4- valent cations
0 - 90 % by weight cement
0 - 30 % by weight polymers
0 - 20 % by weight fibres

5. Highly reactive hydraulic binder according to claim 2, characterised in that the amorphous oxide is amorphous aluminium oxide and/or amorphous silicon dioxide and that the amorphous oxide is amorphous aluminium hydroxide.

6. Highly reactive hydraulic binder according to claim 2, characterised in that the aluminate is an alkali aluminate.

7. Highly reactive hydraulic binder according to claim 1 or 2, characterised in that the calcium aluminate is added in the form of a clinker constituent of a cement.

8. Highly reactive hydraulic binder according to claim 1 or 2, characterised in that the water-reducing medium is a concrete fluidising agent or flow promoter based on lignin sulphonate, a melamine, naphthalene, acrylic acid or maleic acid copolymer.

9. Highly reactive hydraulic binder according to claim 3, characterised in that the binding retarder is a polyhydroxyl compound, polyhydroxy carbonic acid, an ortho-, meta-, pyro-or poly-phosphate, a borate, metaborate or tetraborate.

10. Highly reactive hydraulic binder according to claim 3, characterised in that the polymer is a water-soluble sulphonated synthetic resin, a vinyl-, styrene-, acryl copolymer or a combination of an emulsified epoxy resin and an emulsified hardener dispersed in water.

11. Highly reactive binder according to claim 3, characterised in that the fibres are of polypropylene, polyester, polyamide, glass, metal or carbon.

12. Process for curing the highly reactive hydraulic binder according to one of claims 1 to 11, characterised in that the stated binder is mixed with water and possibly further added materials and is allowed to cure at temperatures in the range from -30°C to + 150°C or by the use of microwaves.

**Revendications**

1. Liant hydraulique, fortement réactif, pour la fabrication de matériaux ou matières premières et de matériaux de construction, caractérisé en ce qu'il contient du schiste bitumineux calciné, $CaO.Al_2O_3$, $CaO.2Al_2O_3$, $3CaO.Al_2O_3$ et $12CaO.7Al_2O_3$, comme aussi au moins un agent réducteur d'eau.

2. Liant hydraulique, fortement réactif, selon la revendication 1, caractérisé en ce qu'il contient complémentairement encore au moins un composé choisi dans le groupe constitué
   - d'un oxyde amorphe de cations tri- et/ou quadrivalents,
   - d'un hydroxyde amorphe de cations tri- et/ou quadrivalents, et
   - d'un aluminate de cations mono- et/ou bivalents, qui n'est ni $CaO.Al_2O_3$, ni $CaO.2Al_2O_3$, ni $3CaO.Al_2O_3$, ni $12CaO.7Al_2O_3$.

3. Liant hydraulique, fortement réactif, selon la revendication 1 ou 2, caractérisé en ce qu'il contient complémentairement, encore au moins un agent accélérateur de prise et/ou un agent retardateur de prise et/ou un polymère et/ou des fibres.

4. Liant hydraulique, fortement réactif, selon l'une quelconque des revendications 1 à 3, caractérisé en ce qu'il présente la composition suivante :

1 à 99,3% en poids de schiste bitumineux calciné,

0,1 à 70% en poids d'aluminate de calcium et éventuellement d'autres cations mono- et/ou bivalents,

0,01 à 10% en poids d'un agent réducteur d'eau,

0,01 à 7% en poids d'un agent retardateur de prise,

0,1 à 50% en poids d'un oxyde amorphe et/ou d'un hydroxyde amorphe de cations tri- et/ou quadrivalents,

0 à 90% en poids de ciment,

0 à 30% en poids de polymère,

0 à 20% en poids de fibres.

5. Liant hydraulique, fortement réactif, suivant la revendication 2, caractérisé en ce que l'oxyde amorphe est constitué d'oxyde d'aluminium amorphe et/ou de bioxyde de silicium amorphe et en ce que l'hydroxyde amorphe est constitué d'hydroxyde d'aluminium amorphe.

6. Liant hydraulique, fortement réactif, selon la revendication 2, caractérisé en ce que l'aluminate est un aluminate de métal alcalin.

7. Liant hydraulique, fortement réactif, suivant la revendication 1 ou 2, caractérisé en ce que l'on ajoute les aluminates de calcium sous la forme de composants de clinker d'un ciment.

8. Liant hydraulique, fortement réactif, selon la revendication 1 ou 2, caractérisé en ce que l'agent réducteur d'eau est un fluidifiant ou plastifiant du béton à base de ligninesulfonate, d'un copolymère de la mélamine, du naphtalène, de l'acide acrylique ou de l'acide maléique.

9. Liant hydraulique, fortement réactif, selon la revendication 3, caractérisé en ce que l'agent retardateur de prise est un composé polyhydroxylé, un acide polyhydroxycarboxylique, un ortho-, méta-, pyro-ou polyphosphate, un borate, métaborate ou tétraborate.

10. Liant hydraulique, fortement réactif, selon la revendication 3, caractérisé en ce que le polymère est une résine synthétique, sulfonée, soluble dans l'eau, un copolymère vinylique, styrénique, acrylique, dispersible dans l'eau, ou une combinaison d'une résine époxy émulsionnable et d'un durcisseur émulsionnable.

11. Liant hydraulique, fortement réactif, selon la revendication 3, caractérisé en ce que les fibres se composent de polypropylène, de polyester, de polyamide, de verre, de métal ou de carbone.

12. Procédé de durcissement du liant hydraulique, fortement réactif, selon l'une quelconque des revendications 1 à 11, caractérisé en ce que l'on mélange le liant précité à de l'eau, comme aussi à d'éventuels additifs complémentaires et en ce qu'on le laisse durcir à des températures qui fluctuent de -30°C à +150°C, ou en recourant à l'emploi de micro-ondes.